(19) Europäisches Patentamt
European Patent Office
Office européen des brevets

(11) EP 0 444 929 B1

(12) **EUROPEAN PATENT SPECIFICATION**

(45) Date of publication and mention
of the grant of the patent:
**14.02.1996   Bulletin 1996/07**

(51) Int Cl.6: **H04B 1/16**

(21) Application number: **91301643.2**

(22) Date of filing: **28.02.1991**

(54) **Power source control system for automobile telephone**

Stromversorgungssteuerungssystem für Auto-Telefon

Dispositif de commande d'alimentation pour téléphone de voiture

(84) Designated Contracting States:
**DE ES GB IT NL SE**

(30) Priority: **01.03.1990 JP 47264/90**

(43) Date of publication of application:
**04.09.1991   Bulletin 1991/36**

(73) Proprietor: **NEC CORPORATION**
**Tokyo (JP)**

(72) Inventors:
 • **Yoshida, Ikio, c/o NEC Corporation**
  **Minato-ku, Tokyo (JP)**
 • **Ishigami, Masahiro, c/o NEC Saitama, Ltd.**
  **Kamikawamachi, Kodama-gun, Saitama (JP)**

(74) Representative: **Orchard, Oliver John**
**London WC1V 7PZ (GB)**

(56) References cited:
 **EP-A- 0 115 966          EP-A- 0 271 740**

## Description

The present invention relates to a power source control system for an on-board telephone for automobile use and, more particularly, to a power source control system which allows such an on-board telephone to be used even when the engine of an automobile carrying it is stopped, with no regard to the configuration of an ignition switch.

A telephone mounted on an automobile and powered by a power source, or battery, of the automobile belongs to a family of mobile radio telephones which are extensively used today. An automobile has an ignition switch which is operated by a key inserted in a key slot. Ignition switches may generally be classified into two types, i. e., a four-position type ignition switch having engine OFF, accessory, engine ON and engine start positions, and a three-position type ignition switch having engine OFF, engine ON and engine start positions. When the ignition switch is brought to the engine start position, the engine of the automobile starts operating. The accessory position allows an on-board stereo, telephone and other accessories to be used while the engine is stopped. The accessory position has to be used with care since it causes the accessories to consume the power fed from the power source, or battery, of the vehicle.

Assume that a conventional automobile telephone is mounted on an automobile of the type having the four-position ignition switch which includes the accessory position. Then, to use the on-board telephone, the key may be operated to actuate the ignition switch to the accessory position or to the engine ON position or to actuate it to the engine start position to start the engine and then to the engine ON position. When the power switch of the telephone is turned on or is held in an ON state, power is fed from the battery to the telephone. When the power switch of the telephone is turned off or when the key is operated to bring the ignition switch to the engine OFF position, the supply of power to the telephone is interrupted.

On the other hand, assume that the automobile on which the conventional vehicle telephone is mounted has the three-position ignition switch which lacks the accessory position. In this case, the telephone is usable only when the key is operated to bring the ignition switch to the engine start position to start the engine and then to the engine ON position. In this condition, when the power switch of the telephone is turned on or held in an ON state, power is fed from the battery to the telephone. When the power switch is turned off or when the key of the automobile is operated to bring the ignition switch to the engine OFF position, the power supply to the telephone is interrupted.

As stated above, the drawback with the conventional power source control system for an automobile telephone is that when the vehicle carrying the telephone therewith has the three-position ignition switch, power cannot be fed to the telephone when the ignition of the automobile Is in an OFF state. Stated another way, the on-board telephone cannot be used unless the ignition switch is brought to the engine start position to start the engine each time.

In the specification of European patent application number 87117189.8, which was published under number 271740 on June 22 1988, there was proposed an arrangement for switching on and off an apparatus, in particular a car radio, operated in a motor vehicle, which included a switching device, operated by the ignition lock of the vehicle, and a switch in the apparatus itself, in which the ignition lock had only "on" and "off' positions, and the switching device supplied at its output a logic level corresponding to a respective position, a bistable trigger circuit being provided which changed its switching state at each actuation of the switching device and also supplied at its output a logic level corresponding to the respective switching state, the digital signals supplied by the switching device of the ignition lock, as well as those supplied by the bistable trigger circuit, being connected to a switching logic arrangement which evaluated both the switching position and the switching direction of the ignition lock and also the switching position of the bistable trigger circuit and generated a control signal for switching the apparatus on and off.

In the specification of European patent application number 84300739.4, which was published under number 115966 on August 15 1984, there was proposed a vehicular radio transceiver normally powered by the ignition switch of a vehicle and the on-off switch of the transceiver, in which a latch circuit sensed the presence of a communication taking place over the receiver and produced a latch signal that powered the transceiver despite the opening of either of the switches.

A feature of an arrangement to be described below is a power source control circuit for an automobile telephone which, whether the ignition switch of an automobile carrying the telephone has an accessory position or not, allows the telephone to be used even when the engine of the automobile is not operated, thereby providing a generally improved power source control system for the automobile telephone.

In a particular arrangement to be described below there is a power source control circuit for a telephone mounted on an automobile which is supplied with power from a power source for the automobile. The supply of power from the power source to the telephone is controlled on the basis of at least one of the state of a power switch of the telephone and whether or not a conversation is under way on the telephone, with no regard to the ON/OFF state of the ignition of the automobile.

A connector is provided for connecting the telephone and the power source of the automobile, and a controller controls the supply of power from the power source of the automobile to the telephone by driving the connector on the basis of the ON/OFF state of the ignition of the automobile, the state of the power switch, and whether or not a conversation is under way on the telephone.

The following description and drawings disclose, by means of an example, the invention which is characterised in the appended claims, whose terms determine the extent of the protection conferred hereby.

In the drawings:-

Fig. 1 is a block diagram schematically showing a power source control section of an automobile vehicle telephone and devices associated therewith to which a power source control system embodying the present invention is applied; and

Fig. 2 is a flowchart demonstrating a specific operation of a CPU included in the power source control section.

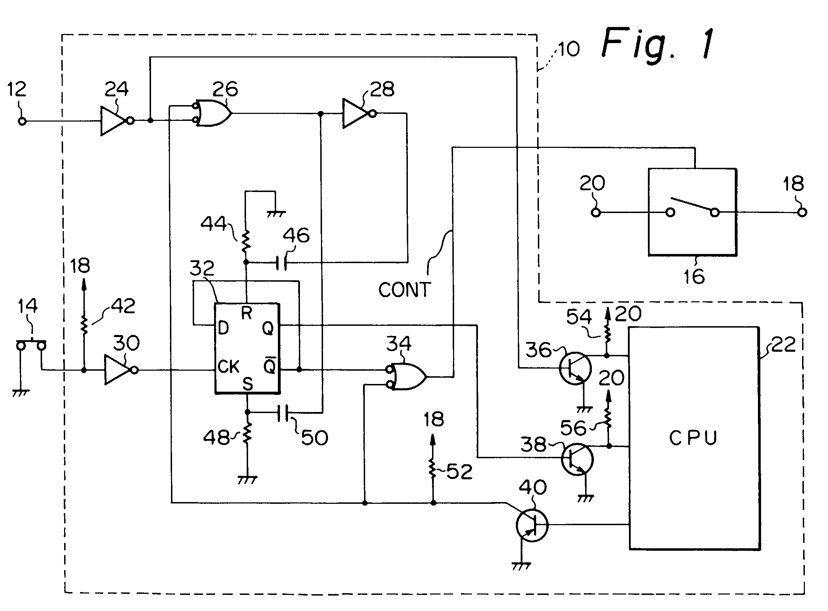

Referring to Fig. 1 of the drawings, a power source control section included in an automobile telephone and implemented with a preferred embodiment of the present invention is shown together with devices associated therewith. The power source control section, generally 10, is connected to an ignition line 12, a power switch 14, and a relay 16. The state of an ignition switch of a vehicle on which the telephone is mounted is represented by a signal which is fed to the control section 10 over the ignition line. The relay 16 connects a power source or battery (not shown) mounted on the vehicle to the telephone via terminals 18 and 20 which are connected to the battery and the telephone, respectively. The control section 10 sends a control signal CONT to the relay 16 to instruct it whether or not to connect the power source and battery terminals 18 and 20, as will be described later specifically. When the control signal CONT is in a high level, the relay 16 connects the terminals 18 and 20 to feed power to the on-board telephone. As the control signal CONT goes low, the relay 16 disconnects the terminals 18 and 20 from each other. Implemented as a push switch, the power switch 14 is closed while it is pushed and inverts the state of power supply to the telephone every time it is pushed.

The power source control section 10 has a CPU or similar processor 22 and peripheral circuitry associated therewith. The CPU 22 may be implemented by µPD70008 or µPD70108 available from NEC. The peripheral circuitry is constantly powered by the automobile power source 18 while the CPU 22 is powered through the terminal 20. More specifically, the CPU 22 starts operating on the connection of the telephone power source terminal 20 to the battery terminal 18.

The peripheral circuitry includes an inverter gate 24 whose input is connected to the ignition line 12. A NAND gate 26 is connected at one input thereof to the output of the inverter gate 24. An inverter gate 28 is connected to the output of the NAND gate 26. An inverter gate 30 is connected at the input thereof to the power switch 14 and at the output thereof to a clock input CK of a D flip-flop 32. The D flip-flop 32 has an inverting output $\overline{Q}$

thereof connected to one input of a NAND gate 34. The NAND gate 34 feeds an output thereof to the relay 16 as a control signal CONT. The inverting output $\overline{Q}$ of the flip-flop 32 is also connected to a data input D of the flip-flop 32. An n-p-n transistor 36 has a base connected to the output of the inverter gate 24, a collector connector to the CPU 22, and an emitter connected to ground. An n-p-n transistor 38 has a base connected to the non-inverting output Q of the D flip-flop 32, a collector connected to the CPU 22, and an emitter connected to ground. Further, an n-p-n transistor 40 has a base connected to the CPU 22, a collector connected to the other inputs of the NAND gates 26 and 34, and emitter connected to ground. The input of the inverter gate 30 is connected to the automobile battery terminal 18 via a pull-up resistor 42. The reset input R of the D flip-flop 32 is connected to ground via a resistor 44 and to the output of the inverter gate 28 via a capacitor 46. The set input S of the D flip-flop 32 is connected to ground via a resistor 48 and to the output of the NAND gate 26 via a capacitor 50. The collector of the transistor 40 is also connected to the automobile power source 18 via a pull-up resistor 52. The collectors of the transistors 36 and 38 are connected to the telephone power source terminal 20 via pull-up resistors 54 and 56, respectively.

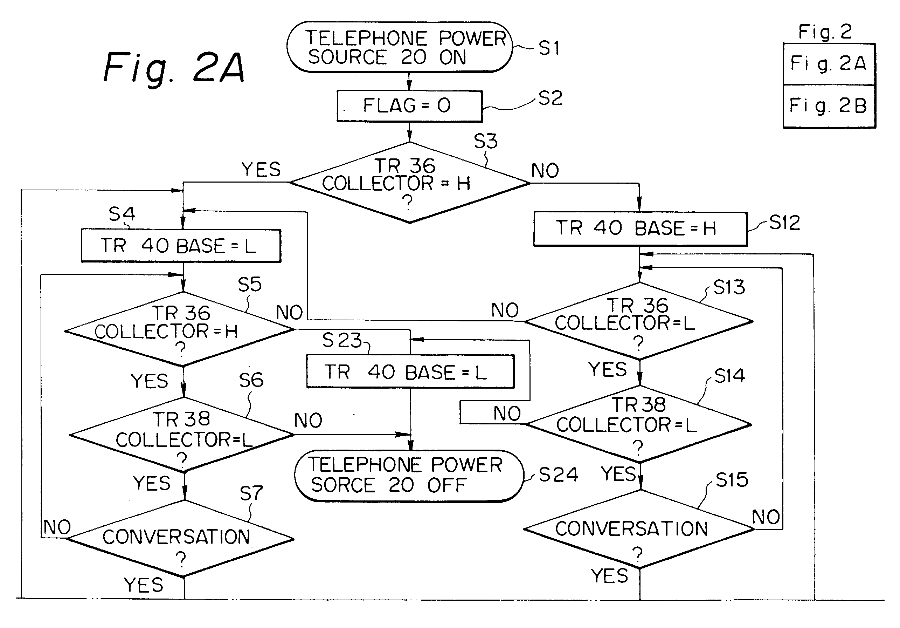

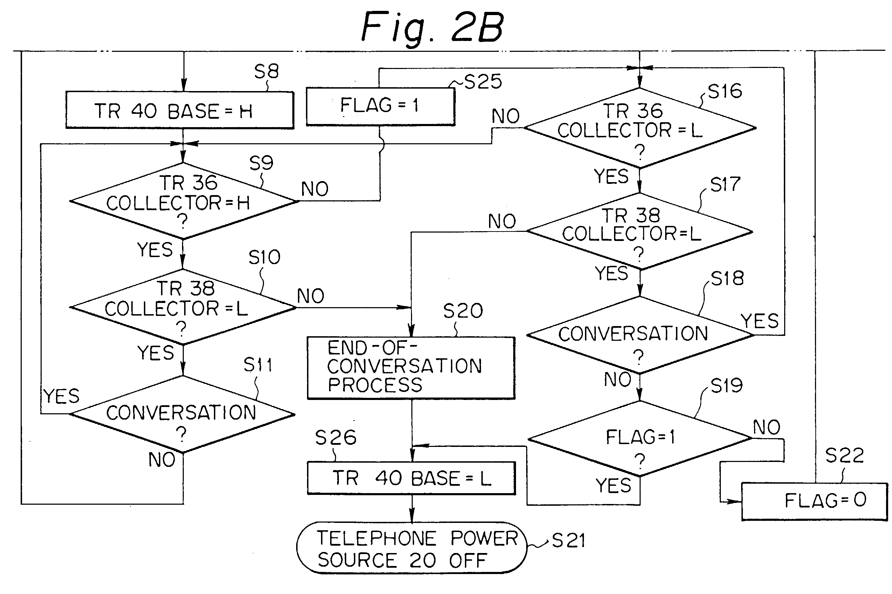

The CPU 22 feeds a signal to the base of the transistor 40 on the basis of the states of the collectors of the transistors 36 and 38 and whether or not the telephone is in use, according to a specific procedure shown in Fig. 2.

The operation of the power source control circuit 10 will be described with reference also made to Fig. 2.

First, how the telephone is turned on and off by the power switch 14 with no regard to the state of the ignition will be described. Assume that the telephone is in an OFF state, i. e., the terminal 20 is connected to the battery terminal 18, and the ignition line 12 is in a high level. Then, as the power switch 14 is pushed once, one high-level pulse is fed to the clock input CK of the D flip-flop 32 via the inverter gate 30. In response, the inverting output $\overline{Q}$ of the D flip-flop 32 goes low despite that the data input D of the flip-flop 32 is in a high level. The low level on the inverting output $\overline{Q}$ of the flip-flop 32 causes the NAND gate 34 to feed a high-level signal to the relay 16 as a control signal CONT, whereby the telephone power source terminal 20 is connected to the battery terminal 18 and, therefore, the CPU 22 are activated. In response, the CPU 22 executes steps S1 to S4 shown in Fig. 2 and then an iterative loop of steps S5 to S7. In the step S4, the CPU 22 feeds a low-level signal to the base of the transistor 40.

When the power switch 14 is pushed again, the inverting output $\overline{Q}$ of the D flip-flop 32 is inverted to a high level. As a result, the NAND gate 34 delivers a low-level signal to the relay 16 as a control signal CONT and thereby turns off the telephone.

Assume that the telephone is in an OFF state, and the ignition line 12 is in a low level. When the power switch 14 is pushed once, a high-level control signal CONT is fed to the relay 16 to thereby turn on the telephone. This in turn causes the CPU 22 to start operating. In this case, the CPU 22 executes the steps S1 to S3 and then an iterative loop of steps S13 to S15 by way of a step S12. In the step S12, the CPU 22 feeds a high-level signal to the base of the transistor 40 with the result that the collector of the transistor 40 goes low. Consequently, the output of the NAND gate 26 turns from low to high to thereby charge the capacitor 50 via the resistor 48. At this instant, one high-level pulse is fed to the set input S of the D flip-flop 32. However, the state of the D flip-flop 32 does not change because the inverting output $\overline{Q}$ of the flip-flop 32 has already gone low.

When the power switch 14 is pushed again, the inverting output $\overline{Q}$ of the flip-flop is inverted to a high level. However, since the collector of the transistor 40 is in a low level, the output of the NAND gate 34 remains in a high level. In the step S14, the CPU 22 detects the change of the collector of the transistor 38 from a low level to a high level. Then, in a step S23, the CPU 22 causes the base of the transistor 40 into a low level and thereby the output of the NAND gate 34 into a low level. As a result, the telephone is turned off.

The telephone is also turned on and off in response to the change of the ignition from OFF to ON and from ON to OFF, as follows.

Assume that the ignition line 12 has gone high while the telephone remains in an OFF state. Then, the output of the inverter gate 28 goes low with the result that one high-level pulse is fed to the reset input R of the D flip-flop 32. This pulse causes the inverting output $\overline{Q}$ of the D flip-flop 32 into a low level and thereby connects the telephone power source terminal 20 to the battery terminal 18, whereby the CPU 22 is powered. In response, the CPU 22 executes the loop of steps S5 to S7 by way of the steps S1 to S4. A low level is fed to the base of the transistor 40, so that the state of the D flip-flop 32 does not change. On the change of the ignition line 12 from a high level to a low level, the output of the NAND gate 26 goes low. This causes the output of the inverter gate 28 to turn from low to high to thereby charge the capacitor 46 via the resistor 44. At this instant, one high-level pulse is fed to the reset input R of the D flip-flop 32. In response, the inverting output $\overline{Q}$ of the D flip-flop 32 goes high to turn off the telephone.

When the state of the ignition changes from ON to OFF while a conversation is under way on the on-board telephone, the embodiment holds the telephone in the ON state until the conversation ends, as follows.

Assume that the ignition line 12 is in a high level with the telephone being held in an ON state. Then, since a conversation is held, the CPU 22 has already entered an iterative loop of steps S9 to S11 by way of a step S8. The inverting output $\overline{Q}$ of the D flip-flop 32 is in a low level. In the step S8, the CPU 22 feeds a high-level signal to the base of the transistor 40. In this condition, when the ignition line 12 goes low, the output of the NAND gate 26 remains in a high level since the collector of the transistor 40 is in a low level. On the other hand, the collector of the transistor 36 goes low with the result that the CPU 22 executes a step S25 on the basis of the result of decision in the step S9 and then enters a loop of steps S16 to S18. This loop is repetitively executed so long as the power switch 14 is not pushed during conversation. When the conversation is ended, the CPU 22 advances to a step S26 by way of the step S18 and a step S19, i.e., it feeds a low level signal to the base of the transistor 40. As a result, the output of the NAND gate 26 goes low to turn the output of the inverter gate 28 from low to high to thereby feed one high-level pulse to the reset input R of the D flip-flop 32, whereby the telephone is turned off.

When it is desired to turn off the telephone by the power switch 14 while a conversation is under way, the telephone is turned off after end-of-conversation processing, as follows.

Assume that the telephone is in an ON state, and that the ignition line 12 is in a high level. In such a condition, the CPU 22 is executing the iterative loop of steps S9 to S11. When the power switch 14 is pushed once, the inverting output $\overline{Q}$ of the D flip-flop 32 goes high. However, since the collector of the transistor 40 is in a low level, the CPU 22 executes a step S20, i. e., end-of-conversation processing on the basis of the result of decision in the step S10. Subsequently, the CPU 22 changes the base of the transistor 40 from a high level to a low level, step S20. As a result, the output of the NAND gate 34 goes low to turn off the telephone. On the other hand, assume that the ignition line 12 is in a low level and, therefore, the CPU 12 is executing the loop of steps 16 to 18. When the power switch 14 is pushed once, the inverting output $\overline{Q}$ of the D flip-flop 32 goes high. However, since the collector of the transistor 40 is in a low level, the output of the NAND gate 34 remains in a high level. Since the collector of the transistor 38 goes high, the CPU 22 executes the end-of-conversation processing, step S20, and then causes the base of the transistor 40 into a low level. As a result, the output of the NAND gate 34 goes low and thereby turns off the telephone.

In summary, it will be seen that there has been described a power source control circuit for an automobile telephone which controls the supply of power to the telephone by a power switch with no regard to the state of an ignition of an automobile on which the telephone Is mounted. Therefore, whether the ignition switch has an accessory position or not, the telephone can be used even when the engine of the automobile is stopped and, therefore, achieves unprecedented freedom. Further, the supply of power to the telephone Is automatically set up on the change of the ignition from OFF to ON and is automatically interrupted on the change thereof from ON to OFF. The user of the telephone, therefore, does not have to turn the power switch on and off each time.

It will be understood that although a particular embodiment has been described, by way of example, variations and modifications thereof, as well as other embodiments may be made within the scope of the protection sought by the appended claims.

## Claims

1. A power source control circuit for use in controlling a power source (10) of a telephone mounted on an automobile in response to the conditions of an ignition switch of the automobile and of a power switch (14) of the telephone by selectively turning on or turning off, when the telephone is in a stand-by state, the power source (10) of a telephone circuit on the basis of the combination of the conditions of the ignition switch and the power switch (14) of the telephone, or by maintaining, when communication takes place via the telephone, the power source (10) of the telephone circuit in an ON state, even when the ignition switch changes from an ON state to an OFF state, characterized in that the circuit includes a set/reset flip flop (32), a connection to the clock input of the set/reset flip flop (32) from the power switch (14) of the telephone to enable the state of the power switch (14) to be indicated to the flip flop (32), a microprocessor (22), a power relay (16), a connection to an input port of the microprocessor (22) for a positive logical signal output from the flip flop (32), a connection to the ON/OFF control terminal of the power relay (16) of the telephone for a negative output from the flip flop (32) via a first logical gate (34), connections for a signal indicating the state of an ignition switch to the input port of the microprocessor (22) and via a second logical gate (26) to a set input (S) and a reset input (R) of the flip flop (32) via respective time constant circuits (48,50) (44,46), in that the microprocessor (22) determines the states of the power switch (14) and of the ignition switch signal which is applied to the set and reset input ports (S,R) of the flip flop (32) and, at the same time, determines whether or not any communication is taking place on the telephone, on the basis of the state of call connection which it executes, and in that, if communication is under way on the telephone, the microprocessor (22) masks the outputs of the first and second logical gates (34)(26) by a means of a signal from an output port of the microprocessor (22), thereby to maintain the power source of the telephone in an ON state, and on completion of the communication, inverts the microprocessor output port signal thereby to unmask the first (34) and the second (26) gates.

2. A circuit as claimed in claim 1, wherein the time constant circuits include a first CR (Capacitor-Resistor) time constant circuit (44,46) connected between the output of the second logical gate (26) and the reset input (R) of the flip flop (32) and a second CR time constant circuit (48,50) connected between an inverter connected to the output of the second logical gate (26) and the set input (S) of the flip flop (32), the first and second CR time constant circuits (44,46)(48,50) each having a respective time constant such that, upon the change of the ignition switch from an ON state to an OFF state, the negative logical output of the flip flop (32) is so set as to cause the power relay (16) to be switched off.

## Patentansprüche

1. Stromversorgungssteuerschaltung zum Steuern einer Stromversorgung (10) eines in einem Kraftfahrzeug angeordneten Telefons als Antwort auf die Zustände eines Zündschalters des Kraftfahrzeugs und eines Stromversorgungsschalters (14) des Telefons, durch wahlweises Einschalten oder Ausschalten, wenn das Telefon in einem Bereitschaftszustand ist, der Stromversorgung (10) einer Telefonschaltung auf der Grundlage der Kombination der Zustände des Zündschalters und des Stromversorgungsschalters (14), oder durch Halten, wenn eine Übertragung über das Telefon stattfindet, der Stromversorgung (10) der Telefonschaltung im EIN-Zustand, auch wenn der Zündschalter von einem EIN-Zustand in einen AUS-Zustand umschaltet, dadurch gekennzeichnet, daß die Schaltung aufweist: ein Setz/Rücksetz-Flipflop (32), eine Verbindung zum Takteingang des Setz/Rücksetz-Flipflops (32) vom Stromversorgungsschalter (14) des Telefons, damit der Zustand des Stromversorgungsschalters (14) dem Flipflop (32) angezeigt werden kann, einen Mikroprozessor (22), ein Stromrelais (16), eine Verbindung zu einem Eingangsanschluß des Mikroprozessors (22) für ein positives Logikausgangssignal vom Flipflop (32), eine Verbindung zum EIN/AUS-Steueranschluß des Stromrelais (16) des Telefons für einen negativen Ausgang vom Flipflop (32) über ein erstes Logikgatter (34), Verbindungen für ein Signal, das dem Eingangsanschluß des Mikroprozessors (22) und über ein zweites Logikgatter (26) einem Setzeingang (S) und einem Rücksetzeingang (R) des Flipflops (32) über entsprechende Zeitkonstantenschaltungen (48, 50) (44, 46) den Zustand eines Zündschalters anzeigt, daß der Mikroprozessor (22) den Zustand des Stromversorgungsschalters (14) und des Zündschaltersignals, das an den Setz- und den Rücksetzeinganganschluß (S, R) des Flipflops (32) angelegt wird, bestimmt und gleichzeitig bestimmt, ob über das Telefon eine Übertragung stattfindet oder nicht, auf der Grundlage des Gesprächsverbindungszustands, den es ausführt, und daß, wenn gerade eine Übertragung über das Telefon stattfindet, der Mikroprozessor (22) die Ausgänge des ersten und des zweiten Logikgatters (34) (26) mittels eines Signals von einem Ausgangsanschluß des Mikroprozessors (22) maskiert, um dadurch die Stromversorgung des Telefons in einem EIN-Zustand zu halten, und nach Beendigung der Übertragung das Ausgangsanschlußsignal des Mikroprozessors invertiert, um dabei das erste (34) und das zweite (26) Gatter zu demaskieren.

2. Schaltung nach Anspruch 1, wobei die Zeitkonstantenschaltungen aufweist: eine erste CR-(Kondensator-Widerstands-)Zeitkonstantenschaltung (44, 46), die zwischen den Ausgang des zweiten Logikgatters (26) und den Rücksetzeingang (R) des Flipflops (32) geschaltet ist, und eine zweite CR-Zeitkonstantenschaltung (48, 50) aufweist, die zwischen einen Inverter, der mit dem Ausgang des zweiten Logikgatters (26) verbunden ist, und den Setzeingang (S) des Flipflops (32) geschaltet ist, wobei die erste und die zweite CR-Zeitkonstantenschaltung (44, 46)(48, 50) jeweils eine entsprechende Zeitkonstante aufweisen, so daß beim Umschalten des Zündschalters von einem EIN-Zustand in einem AUS-Zustand der negative Logikausgang des Flipflops (32) so gesetzt ist, daß ein Ausschalten des Stromrelais (16) bewirkt wird.

**Revendications**

1. Circuit de commande de source d'alimentation destiné à être utilisé pour commander une source d'alimentation (10) d'un poste téléphonique monté dans une automobile, en réponse aux conditions d'un interrupteur d'allumage de l'automobile et d'un interrupteur d'alimentation (14) du poste téléphonique, en mettant en ou hors circuit sélectivement, lorsque le poste téléphonique est dans un état d'attente, la source d'alimentation (10) d'un circuit téléphonique sur la base de la combinaison des conditions de l'interrupteur d'allumage et de l'interrupteur d'alimentation (14) du poste téléphonique, ou en maintenant, lorsqu'une communication a lieu via le téléphone, la source d'alimentation (10) du circuit téléphonique à l'état en circuit, même lorsque l'interrupteur d'allumage passe d'un état en circuit à un état hors circuit, caractérisé en ce que le circuit comprend une bascule RS (32), une connexion à l'entrée d'horloge de la bascule RS (32) provenant de l'interrupteur d'alimentation (14) du téléphone afin que l'état de l'interrupteur d'alimentation (14) puisse être indiqué à la bascule (32), un microprocesseur (22), un relais de puissance (16), une connexion à un accès d'entrée du microprocesseur (22) pour une sortie positive de signal logique provenant de la bascule (32), une connexion à la borne de commande en circuit/hors circuit du relais de puissance (16) du téléphone pour une sortie négative provenant de la bascule (32) via une première porte logique (34), des connexions pour un signal indiquant l'état d'un interrupteur d'allumage à l'accès d'entrée du microprocesseur (22) et via une seconde porte logique (26) à une entrée S (S) et à une entrée R (R) de la bascule (32) via des circuits à constantes de temps respectives (48, 50) (44, 46), en ce que le microprocesseur (22) détermine les états de l'interrupteur d'alimentation (14) et du signal d'interrupteur d'allumage qui est appliqué aux accès d'entrée S et R (S, R) de la bascule (32) et, en même temps, détermine si une communication quelconque a lieu ou non via le téléphone, sur la base de l'état de la connexion d'appel qu'il exécute, et en ce que, si une communication est en cours via le téléphone, le microprocesseur (22) masque les sorties des première et seconde portes logiques (34) (26) grâce à un signal provenant d'un accès de sortie du microprocesseur (22), afin de maintenir ainsi la source d'alimentation du téléphone à l'état en circuit, et à la fin de la communication, inverse le signal d'accès de sortie du microprocesseur afin de démasquer ainsi la première (34) et la seconde (26) portes.

2. Circuit selon la revendication 1, dans lequel les circuits à constantes de temps comprennent un premier circuit à constante de temps CR (Condensateur-Résistance) (44, 46) connecté entre la sortie de la seconde porte logique (26) et l'entrée R (R) de la bascule (32) et un second circuit à constante de temps CR (48, 50) connecté entre un inverseur connecté à la sortie de la seconde porte logique (26) et l'entrée S (S) de la bascule (32), les premier et second circuits à constantes de temps CR (44, 46) (48, 50) ayant chacun une constante de temps respective telle que, lors du passage de l'interrupteur d'allumage d'un état en circuit à un état hors circuit, la sortie logique négative de la bascule (32) est établie de façon à provoquer la mise hors circuit du relais de puissance (16).

Fig. 1

EP 0 444 929 B1

Fig. 2A

Fig. 2
| Fig. 2A |
| Fig. 2B |

TELEPHONE POWER SOURCE 20 ON — S1

FLAG = O — S2

S3 — TR 36 COLLECTOR = H ?

YES — S4 — TR 40 BASE = L

NO — S12 — TR 40 BASE = H

S5 — TR 36 COLLECTOR = H ?

NO — S13 — TR 36 COLLECTOR = L ?

S23 — TR 40 BASE = L

YES — S6 — TR 38 COLLECTOR = L ?

YES — S14 — TR 38 COLLECTOR = L ?

NO

TELEPHONE POWER SORCE 20 OFF — S24

YES — S7 — CONVERSATION ?

YES — S15 — CONVERSATION ?

NO

YES

EP 0 444 929 B1

Fig. 2B

S8 — TR 40 BASE = H

S9 — TR 36 COLLECTOR = H ? → NO

S10 — TR 38 COLLECTOR = L ? → NO

S11 — CONVERSATION ? → YES / NO

S25 — FLAG = 1

S16 — TR 36 COLLECTOR = L ? → NO / YES

S17 — TR 38 COLLECTOR = L ? → NO / YES

S18 — CONVERSATION ? → YES

S19 — FLAG = 1 ? → YES / NO

S20 — END-OF-CONVERSATION PROCESS

S26 — TR 40 BASE = L

S21 — TELEPHONE POWER SOURCE 20 OFF

S22 — FLAG = 0